# DEMANDE DE BREVET EUROPEEN

(11) **EP 1 335 524 A1**
(43) Date de publication de la demande: **13.08.2003**
(21) Numéro de dépôt: 03290267.8
(22) Date de dépôt: 04.02.2003
(51) Int. Cl.: H04L 12/24

(54) **Deploiement des règles par un dispositif de gestion de services d'un réseau**

(30) Priorité: 07.02.2002 FR 0201500
(71) Demandeur: ALCATEL, 75008 Paris (FR)
(72) Inventeur: Koops, Mark, 91310 Montlhery (FR)
(74) Mandataire: Chaffraix, Sylvain

(57) **Abrégé**

Dispositif de gestion de services (PM) pour permettre le déploiement de règles sur un ensemble d'éléments (A, B, C, D) d'un réseau de données, notamment de télécommunication, les règles permettant la mise en oeuvre de services, caractérisé en ce qu'il dispose de moyens d'accès à une base de données (DB) contenant des informations relatives à l'ensemble d'éléments de réseau, et en ce que le déploiement est fonction des informations.

## Description

La présente invention est relative à la gestion de réseaux de données, tels les réseaux de télécommunication, et à la gestion de services mis en oeuvre sur ces réseaux. Elle concerne plus particulièrement la gestion de services par règles de politique (*policy rules*, en anglais) et un dispositif et un procédé pour faciliter la mise en oeuvre de ces règles de politique (appelées aussi, plus simplement, règles, dans la suite).

Les réseaux de données peuvent mettre en oeuvre des services très divers, nécessitant des fonctionnalités très diverses des éléments de réseau.
Une des fonctions de la gestion de réseau consiste à déterminer les éléments de réseau qui peuvent mettre en oeuvre ces services, en fonction des fonctionnalités requises par les services et des fonctionnalités offertes par chacun des éléments de réseau.

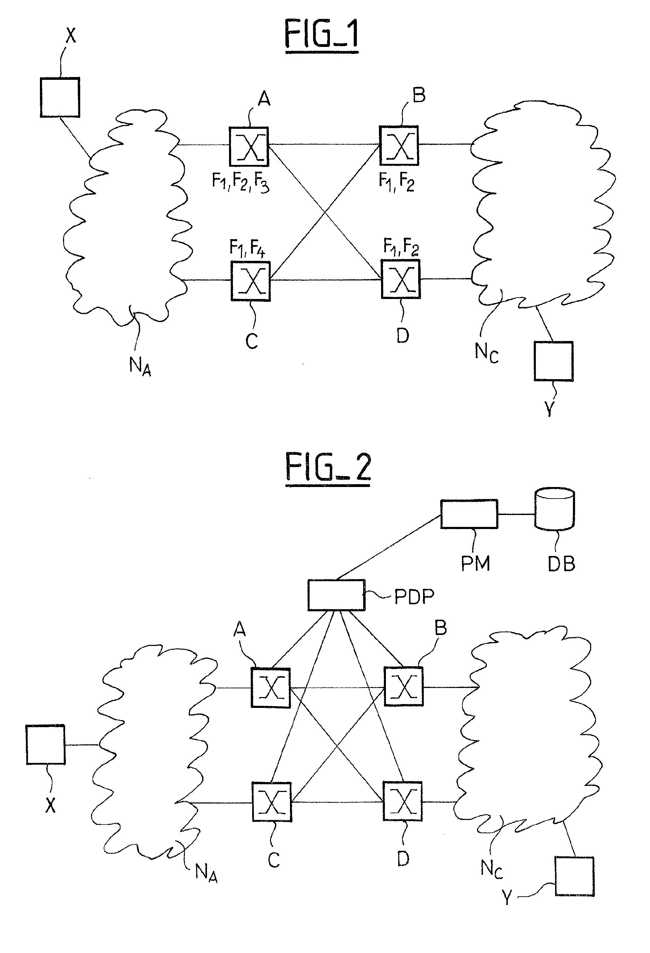

La figure 1 illustre une situation classique.
Un terminal X est lié à un réseau d'accès N_{A} et veut établir une session de service avec un terminal Y lié à un réseau coeur N_{C}. Quatre routeurs, A, B, C et D permettent de relier le réseau d'accès N_{A} au réseau coeur N_{C}.
Chaque routeur peut mettre en oeuvre un ensemble limité de fonctionnalité. Le routeur A peut mettre en oeuvre les fonctionnalités F₁ (par exemple, de la qualité de service), F₂ (par exemple, de la sécurisation de transmission de type « *Firewall* ») et F₃ (par exemple, de la cryptographie des données transmises). Le routeur B peut mettre en oeuvre des fonctionnalités F₁ et F₂. Le routeur C peut mettre en oeuvre les fonctionnalités F₁ et F₄ (par exemple, de la traduction d'adresses de type NAT (*Network Address Translation*). Enfin, le routeur D peut mettre en oeuvre les fonctionnalités F₁ et F₂.

Afin de mettre en oeuvre ce service, il faut donc déterminer quel routeurs vont être utilisé pour véhiculer le flot de données entre les terminaux X et Y. Ce choix doit être fait en comparant les fonctionnalités requises par le service (par exemple, F₁, F₂ et F₄), et les fonctionnalités offertes par les routeurs. Dans la situation illustrée par l'exemple, on a donc deux possibilités : soit on choisit les routeurs C et B, soit on choisit les routeurs C et D.
Selon l'état de la technique, ce choix est fait par un opérateur, par comparaison visuelle des fonctionnalités requises par le service et d'une carte topologique du réseau, qui comporte les fonctionnalités offertes par les routeurs.

Une fois le choix établi, il doit être « provisionné », c'est-à-dire que le dispositif de gestion de service doit communiquer aux routeurs impliqués les informations nécessaires à la mise en place de ce service.
Ainsi, si les routeurs C et B sont choisis, il faut transmettre à ces routeurs les informations nécessaires pour remplir les fonctionnalités requises par le service, c'est-à-dire F₁, F₂ et F₄.

Cette phase d'« approvisionnement » (ou *provisioning*, en anglais) peut être effectuée par la transmission de règles appropriées.
Par exemple, la fonctionnalité requise F₂ peut déclencher la transmission au routeur B d'une règle consistant à ne laisser passer les flots de données qu'uniquement entre 8h00 et 19h00.

Dans l'état de l'art, il existe des dispositifs de gestion de service qui sont associés à des bases de données mémorisant des informations sur les règles, les fonctionnalités des équipements de réseau et/ou sur les services à mettre en oeuvre. C'est par exemple le cas de la demande de brevet européenne EP 1026867 déposée par la société Nortel.

Toutefois, actuellement, ces dispositifs de gestion de service ne permettent pas de mettre facilement en correspondance les fonctionnalités offertes par les équipements de réseau et les fonctionnalités requises par les services. La phase de comparaison manuelle est pénalisante dans la mesure où d'une part, elle est coûteuse en temps et d'autre part, elle est sujette à erreurs de la part de l'opérateur.
De la même façon, il n'existe pas de mécanisme simple de mise en correspondance des fonctionnalités requises par les services et les règles à mettre en oeuvre sur les équipements de réseau.

Le but de l'invention est de pallier ce manque de l'état de la technique.
Plus précisément, l'invention a pour objet un dispositif de gestion de services pour permettre le déploiement de règles sur un ensemble d'éléments d'un réseau de données, notamment de télécommunication, ces règles permettant la mise en oeuvre de services. Ce dispositif de gestion de services se caractérise en ce qu'il dispose de moyens d'accès à une base de données contenant des informations relatives :
- audit ensemble d'éléments de réseau,
- audits services et
- auxdites règles,
Ces différentes informations sont mises en correspondance, et le déploiement est fonction de ces informations.

Selon une mise en oeuvre de l'invention, le dispositif de gestion de services comporte de surcroît des moyens pour stocker les informations dans la base de données, à partir de données contenues dans des messages d'enregistrement reçus d'éléments de réseau.

Ces messages d'enregistrement peuvent par exemple être transmis par l'intermédiaire de point de décision de règles.

Ainsi, la mise en correspondance peut être faite de façon automatique par le gestionnaire de règles. Cela permet donc de masquer à l'opérateur, toutes les informations relatives au réseau, à sa topologie et aux fonctionnalités offertes par chacun de ses éléments. La tâche de l'opérateur et donc grandement facilitée et les risques d'erreurs réduit au minimum.

L'invention et ses avantages apparaîtront de façon plus claire dans la description qui va suivre en liaison avec les figures annexées.
La figure 1, déjà commentée, illustre un exemple de réseau de données.
La figure 2 représente de façon schématique, le contexte dans lequel peut s'insérer le dispositif de gestion de services de l'invention.
La figure 3 est un diagramme UML représentant le modèle qui peut être utilisé par le dispositif de gestion de services.

Sur la figure 2, on a représenté deux terminaux X et Y connectés, respectivement, à un réseau d'accès N_{A} et à un réseau coeur N_{C}. Les deux réseaux N_{A} et N_{C} sont eux-mêmes connectés par l'intermédiaire de 4 routeurs, A, B, C, D, connectés entre eux.
Au moins ces 4 éléments de réseau sont associés à un gestionnaire de règles PM, par l'intermédiaire d'un point de décision de règles PDP (pour *Policy Decision* Point, en anglais).
Le gestionnaire de règles PM (pour *Policy Manager,* en anglais) peut faire partie d'un dispositif de gestion de services plus important. En pratique, ce gestionnaire de règles peut n'être qu'une fonctionnalité du dispositif de gestion de services, ou bien être un module indépendant qui, avec d'autres modules indépendants, participe à ce dispositif de gestion de services.

De même, le gestionnaire de règles PM peut être directement connecté aux éléments de réseau A, B, C et D, c'est-à-dire sans l'intermédiaire du point de décision de règles PDP.

Lors de la mise en marche du réseau, ou tout du moins d'un ou plusieurs des éléments de réseau le constituant, les éléments de réseau adressent des messages d'enregistrement au point de décision de règles PDP.

Selon une mise en oeuvre de l'invention, ces messages d'enregistrement contiennent des données relatives aux capacités des équipements de réseau.
Il peut par exemple s'agir :
- de la version du logiciel embarqué par l'équipement,
- de la version du matériel de l'équipement,
- le nombre d'interfaces de l'équipement,
etc.

Le point de décision de règles PDP collecte ces données et les transmet au gestionnaire de règles PM, avec des informations le concernant, comme par exemple son adresse IP (*Internet Protocol*).
Le gestionnaire de règles PM ou le dispositif de gestion de service le contenant, mémorise alors ces données dans une base de données DB.

Une des fonctions principales du gestionnaire de règle PM est de déployer des règles vers les éléments de réseau, le plus souvent par l'intermédiaire de points de décision de règles.
Selon l'invention, le gestionnaire de règles dispose de moyens d'accès à la base de données DB qui contient les informations relatives aux éléments de réseau. Ces informations ont pu être mémorisés selon le procédé décrit ci-dessus consistant à faire remonter des données par les messages d'enregistrement issus des éléments de réseau, ou par tout autre moyen (notamment manuellement, lors de la configuration du réseau).
Selon l'invention, le déploiement des règles est fonction de ces informations. Ainsi, afin de déterminer quelles règles doivent être transmises à quels éléments de réseau, le gestionnaire de règles PM consulte les informations contenues dans la base de données DB.

Cette détermination peut notamment être réalisée par la mise en correspondance :
- Des fonctionnalités offertes par les éléments de réseau (c'est-à-dire, les informations contenues dans la base de données DB),
- Des fonctionnalités requises par le service à mettre en oeuvre, et
- Des fonctionnalités nécessaires aux règles.
   Par cette mise en correspondance, le gestionnaire de règles PM est à même de déterminer de façon automatique, les règles appropriées à la mise en oeuvre du service en question, et de la façon dont elles doivent être déployées.

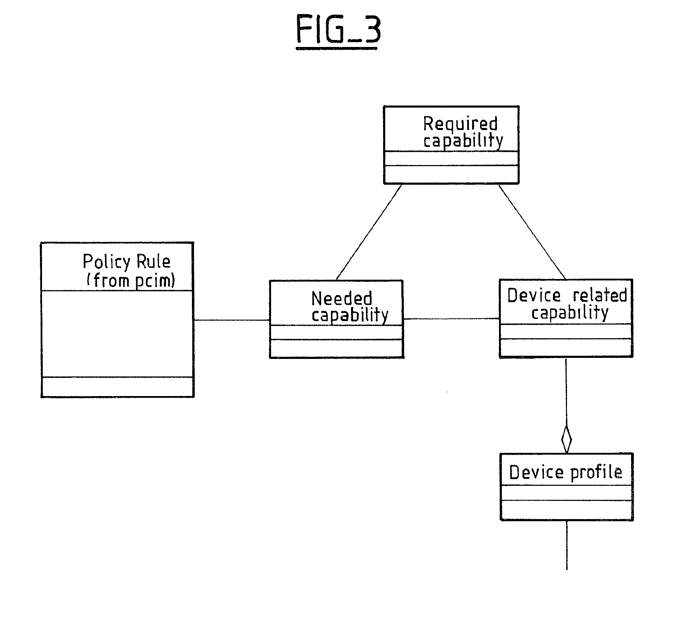

La figure 3 illustre, sous la forme d'un schéma UML (*Unified Modeling Language*), cette mise en correspondance. Un tel schéma peut être compris par l'homme du métier pour la réalisation d'un programme d'ordinateur capable de mettre en oeuvre l'invention au sein du gestionnaire de règles PM.
Ce schéma UML est composé de différentes boîtes, chacune représentant une classe d'objets.
La classe « PolicyRule » représente les règles de politique. Elles peuvent être conformes au RFC 3060 de l'IETF (*Internet Engineering Task Force*), intitulé « *Policy Core Information Model* » et publié en février 2001.
Ces règles peuvent être stockées dans une base de données, non représentée sur la figure 2. A chaque règle est associé un ensemble de paramètres : un drapeau indique si la règle est validée, une priorité, une liste de conditions, une liste d'actions à déclencher...
De ces paramètres, on peut tirer les fonctionnalités nécessaires pour mettre en oeuvre chaque règle. Ces fonctionnalités nécessaires sont représentées par la classe « Needed Capability ».
En effet, chaque règle est associée à au moins une condition et au moins une action. Afin de mettre en oeuvre cette action, et même pour déterminer la condition, l'élément de réseau doit posséder les fonctionnalités nécessaires. Ainsi ne peut-on pas, par exemple, mettre en oeuvre une règle de traduction d'adresses de type NAT (*Network Address Translation*) sur un routeur ne possédant pas de fonctionnalités NAT.
Par ailleurs, la classe « Required Capability » représente les fonctionnalités requises pour la mise en oeuvre des services.
La classe « Device profile » représente les profils des différents éléments de réseau. Elle peut contenir un ensemble de paramètres associés à ces éléments de réseau. De ces paramètres, on peut tirer les fonctionnalités offertes par les éléments de réseau. Ces fonctionnalités offertes sont représentées par la classe « Device Related Capability ».
Les trois classes « Device related Capability», « Required Capability » et « Needed Capability » sont mises en relations afin de permettre la mise en correspondance décrite précédemment.

Ainsi, la relation entre les classes « Required Capability » et « Device Related Capability » peut permettre de déterminer, pour un service donné, quels sont les éléments de réseau qui peuvent les mettre en oeuvre.
La relation entre les classes « Device related Capability » et « Needed Capability» peut alors permettre de déterminer quelles règles doivent être déployées vers ces éléments de réseau.

## Revendications

1. Dispositif de gestion de services (PM) pour permettre le déploiement de règles sur un ensemble d'éléments (A, B, C, D) d'un réseau de données, notamment de télécommunication, lesdites règles permettant la mise en oeuvre de services, **caractérisé en ce qu'**il dispose de moyens d'accès à une base de données (DB) contenant des informations relatives audit ensemble d'éléments de réseau, audits services et auxdites règles, mises en correspondance, et **en ce que** le déploiement est fonction desdites informations.

2. Dispositif de gestion de services selon la revendication 1, comportant de surcroît des moyens pour stocker lesdites informations dans ladite base de données, à partir de données contenues dans des messages d'enregistrement reçus d'éléments de réseau.

3. Dispositif de gestion de services selon la revendication 2, dans lequel lesdits messages d'enregistrement sont transmis par l'intermédiaire de point de décision de règles (PDP).

4. Dispositif de gestion de services selon la revendication 1, dans lequel la mise en correspondance est réalisée au moyen d'un schéma en langage UML.
